# EUROPÄISCHE PATENTSCHRIFT

(11) **EP 1 563 775 B1**
(45) Veröffentlichungstag und Bekanntmachung des Hinweises auf die Patenterteilung: **24.01.2007**
(21) Anmeldenummer: 04003318.5
(22) Anmeldetag: 13.02.2004
(51) Int. Cl.: A47J 31/44

(54) **Parallele Längsführung**
Parallel guides
Guides parallèles

(43) Veröffentlichungstag der Anmeldung: 17.08.2005
(73) Patentinhaber: WMF WÜRTTEMBERGISCHE METALLWARENFABRIK AG, 73309 Geislingen/Steige (DE)
(72) Erfinder: Motsch, Hans, 73312 Geislingen/Steige (DE)
(74) Vertreter: Grünecker, Kinkeldey, Stockmair & Schwanhäusser Anwaltssozietät

(56) Entgegenhaltungen:
- CH-A- 315 281
- DE-A- 2 922 022
- FR-A- 2 722 256
- GB-A- 1 486 967
- US-A- 2 240 953

## Beschreibung

Die Erfindung bezieht sich auf eine parallele Längsführung der im Oberbegriff von Anspruch 1 erläuterten Art, wie sie insbesondere für einen höhenverstellbaren Getränkeauslauf einer Getränkemaschine verwendet werden kann.

Eine derartige parallele Längsführung ist aus der CH 315 281 A bekannt. Die bekannte parallele Längsführung dient der Höhenverstellung einer Kaffeebrühvorrichtung mit einem Auslauf. Die parallele Längsführung enthält zwei Stangen oder Rohre, an denen eine Aufnahmeplatte, an der die Brühvorrichtung befestigt ist, höhenverstellbar ist. Die Aufnahmeplatte wirkt mit einer Klemmplatte zusammen, die über einen Gewindeknauf gegen die Aufnahmeplatte gezogen werden kann, wobei beide Führungselemente zum Arretieren der Brühvorrichtung in der vorgegebenen Höhenstellung zwischen der Klemmplatte und der Aufnahmeplatte festgeklemmt werden. Die Arretiervorrichtung ist jedoch relativ umständlich zu handhaben und erfordert erhöhte Aufmerksamkeit um sicherzustellen, dass beim Lösen der Arretierung nicht auch die Führungsfunktion verloren geht und sich die Brüheinrichtung vollständig von der Längsführung löst.

Ein höhenverstellbarer Getränkeauslauf für eine Kaffeemaschine ist beispielsweise aus dem DE-GM 200 17 859 bekannt. Bei der bekannten Kaffeemaschine ist sowohl eine Frontblende, an der ein Getränkeauslauf angeordnet ist, bezüglich des Gehäuses der Kaffeemaschine sowie der Getränkeauslauf einerseits zusammen mit der Frontblende und andererseits unabhängig davon höhenverstellbar. Die Verstelleinrichtung enthält in beiden Fällen eine Führungsstange mit einem darauf geführten Führungsklotz, dessen Bewegung auf der Führungsstange reibungsgebremst ist. Diese Ausgestaltung ist jedoch anfällig gegen größere Erschütterungen.

Schließlich ist es aus der DE 29 22 022 C2 bekannt, die Tassenablage einer Kaffeemaschine bezüglich des feststehenden Getränkeauslaufs zu verstellen. Als Führung zur Höhenverstellung der Tassenablage dient eine Längsführung mit einer einzigen Stange, die in einer Durchgangsbohrung läuft. Zum Arretieren der Tassenablage weisen sowohl die Stange als auch die Durchgangsbohrung jeweils einen ovalen Querschnitt auf, wobei die Stange mit einem allseitigen Spiel in der Bohrung aufgenommen ist, d.h. die Bohrung ist um den gesamten Umfang größer als die Stange, weist jedoch die gleiche Querschnittsform auf. Mit Hilfe eines Handhebels werden Durchgangsbohrung und Stange relativ zueinander verdreht (im ersten Ausführungsbeispiel wird die Stange verdreht, im zweiten Ausführungsbeispiel wird die Bohrung verdreht), bis sich die beiden ovalen Querschnitte ineinander verklemmen. Da jedoch die Stange mit seitlichem Spiel in der Bohrung aufgenommen ist, kann sich die Tassenablage im nicht arretierten Zustand leicht verkippen, was insbesondere dann nachteilig sein kann, wenn eine gefüllte Kaffeekanne auf der Ablage steht. Weiterhin besteht die Gefahr, dass zumindest die Verstellbewegung nach oben ruckartig erfolgt, da sich Stange und Bohrung bei der Aufwärtsbewegung immer wieder gegeneinander verkippen und in Reibungskontakt miteinander kommen. Auch hier besteht die Gefahr, dass Getränk verschüttet wird, wenn eine Höhenverstellung versucht wird (beispielsweise wenn das Gefäß vorab zu hoch eingestellt wurde), solange ein Gefäß auf der Tassenablage steht.

Der Erfindung liegt die Aufgabe zugrunde, eine einfache, sichere und unkompliziert zu arretierende, parallele Längsführung bereitzustellen, die sich besonders für die Höhenverstellung eines Getränkeauslaufs einer Getränkemaschine eignet.

Die Aufgabe wird durch die im Anspruch 1 angegebenen Merkmale gelöst.

Die erfindungsgemäße, parallele Längsführung ist konstruktiv einfach aufgebaut und enthält eine integrierte Arretiereinrichtung, die einem der Führungselemente zugeordnet ist. Trotzdem erlaubt die erfindungsgemäße Längsführung eine im Wesentlichen verkippungsfreie und somit ruckfreie Längsbewegung mit ausreichender Präzision.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine Vorderansicht in schematisierter Darstellung einer mit der erfindungsgemäßen Längsführung versehenen Getränkemaschine,

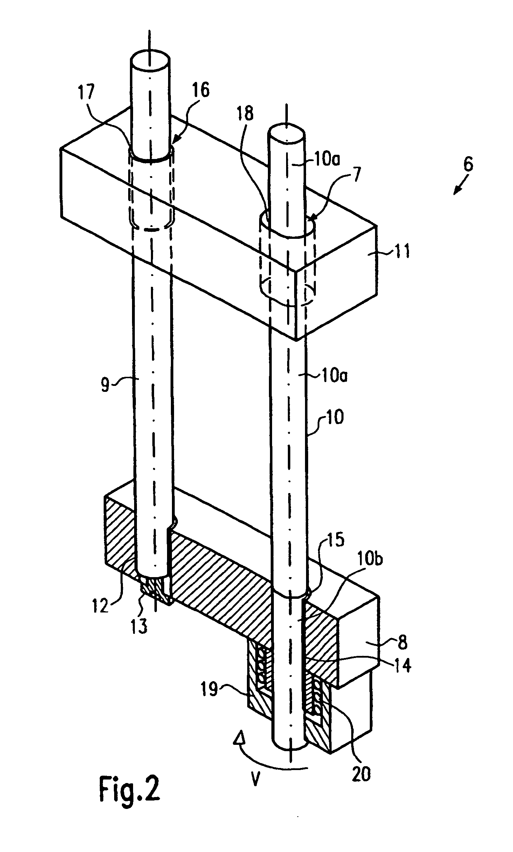

- Fig. 2: die erfindungsgemäße, parallele Längsführung in schematischer, perspektivischer Darstellung,
- Fig. 3: die Draufsicht auf die erfindungsgemäße Längsführung in Verstellposition, und
- Fig. 4: die Draufsicht auf die erfindungsgemäße Längsführung in Klemmposition.

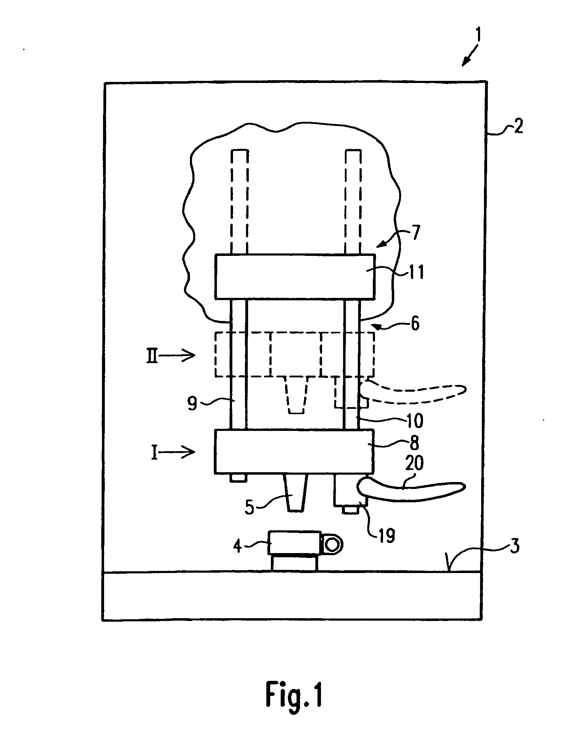

Fig. 1 zeigt in schematischer Darstellung eine Getränkemaschine 1, dargestellt als Kaffeemaschine, die ein Gehäuse 2 und eine vom Gehäuse 2 vorstehende Tassenablage 3 aufweist. Auf die Tassenablage 3 können zu befüllende Gefäße 4, dargestellt ist eine Tasse, mit unterschiedlichen Höhen aufgestellt und über einen Getränkeauslauf 5 mit Getränk befüllt werden. Der Getränkeauslauf 5 ist mit Hilfe einer parallelen Längsführung 6 mit integrierter Arretiereinrichtung 7 stufenlos zwischen einer ersten, unteren Höhenposition I, die in Fig. 1 mit durchgezogenen Linien dargestellt ist, und einer zweiten, oberen Höhenposition II, die in Fig. 1 gestrichelt dargestellt ist, verstellbar und in den beiden Höhenpositionen I, II sowie in jeder dazwischenliegenden Position stufenlos arretierbar. Die Höhenpositionen I, II sind durch Anschläge festgelegt.

Der Getränkeauslauf 5 ist über flexible, nachführbare Leitungen mit den entsprechenden Getränkebereitungseinrichtungen im Inneren des Gehäuses 2 verbunden.

Die parallele Längsführung 6 enthält eine Aufnahmeplatte 8, an der der Getränkeauslauf 5 befestigt ist. Die Längsführung 6 enthält weiterhin zwei langgestreckte und parallel zueinander angeordnete Führungselemente 9, 10 sowie einen Führungsblock 11, der ortsfest ist, d.h. an der Getränkemaschine 1 oder deren Gehäuse 2 befestigt wurde.

Das erste Führungselement 9 dient der Führung entlang der gewünschten Verstellbewegung. Das erste Führungselement 9 ist stangenartig ausgebildet und hat im dargestellten Ausführungsbeispiel einen kreisrunden Querschnitt. Das erste Führungselement 9 ist im dargestellten Ausführungsbeispiel mit der Aufnahmeplatte 8 derart verbunden, dass sich das erste Führungselement 9 bezüglich der Aufnahmeplatte 8 auf jeden Fall nicht seitlich bewegen kann, d.h. radial fest ist. Im dargestellten Ausführungsbeispiel ist das erste Führungselement 9 auch axial fest in der Aufnahmeplatte 8 angeordnet, so dass es die Verstellbewegung bei der Höhenverstellung mitmacht. Diese Befestigung wird dadurch erreicht, dass das erste Führungselement 9 in einer Ausnehmung 12 in der Aufnahmeplatte 8 aufgenommen und mittels einer Schraube 13 mit der Aufnahmeplatte 8 verschraubt wird. Andere Befestigungsmöglichkeiten sind ebenfalls denkbar. Die erfindungsgemäßen Vorteile werden jedoch nicht verschlechtert, wenn die Aufnahmeplatte 8 auf dem ersten Führungselement 9 axial verschiebbar ist, bzw. das erste Führungselement 9 mit kreisrundem Querschnitt in der Ausnehmung 12 verdrehbar ist.

Das zweite Führungselement 10 muss jedoch im dargestellten Ausführungsbeispiel axial fest, d.h. gegen axiale Bewegung gesichert, mit der Aufnahmeplatte 8 verbunden sein, so dass es die Höhenverstellbewegung mitmacht. Das zweite Führungselement 10 ist ebenfalls stangenartig ausgebildet und enthält einen ersten Stangenbereich 10a und einen zweiten Stangenbereich 10b. Der zweite Stangenbereich 10b weist bevorzugt einen kreisförmigen Querschnitt auf und ist in einer als Durchgangsbohrung ausgebildeten Ausnehmung 14 in der Aufnahmeplatte 8 axial und seitlich, d.h. radial, fest aber drehbar gelagert, bevorzugt in einer in die Ausnehmung 14 eingesetzten Lagerbuchse 15. Der zweite Stangenbereich 10b geht oberhalb der Aufnahmeplatte 8 in den ersten Stangenbereich über.

Das erste Führungselement 9 erstreckt sich durch den Führungsblock 11 mit einer Gleitpassung 16, die aus einer ersten, durchgehenden Ausnehmung 17 im Führungsblock 11 und einen ohne Spiel und gleitend in der Ausnehmung 17 laufenden Querschnitt des ersten Führungselementes 9 besteht. Durch diese Gleitpassung 16 wird eine seitlich stabile und verkippungsarme Führung gewährleistet.

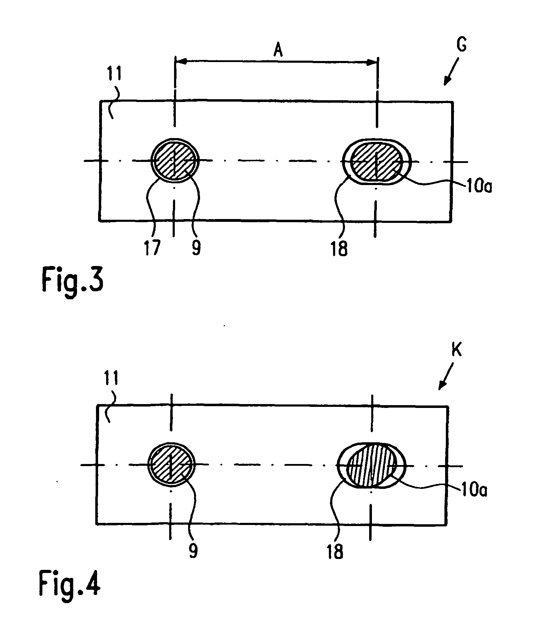

Auch das zweite Führungselement 10 erstreckt sich mit seinem ersten Stangenbereich 10a durch eine durchgehende, zweite Ausnehmung im Führungsblock 11. Die Ausnehmung 18 und der erste Stangenbereich 10a sind Teil der Arretierungseinrichtung 7. Der erste Stangenbereich 10a weist, wie auch in den Fig. 3 und 4 ersichtlich, einen unrunden Querschnitt, bevorzugt einen ovalen Querschnitt auf. Als unrunder Querschnitt wird jeder Querschnitt definiert, der in einer Richtung eine größere Abmessung hat als in einer zweiten Richtung. Zweckmäßig ist jedoch, dass der unrunde Querschnitt keine scharfen Kanten sondern einen mit sanften Richtungsänderungen kontinuierlich verlaufenden Umfang aufweist. Der Querschnitt ist bevorzugt oval, kann jedoch auch rechteckig mit abgerundeten Kanten ausgebildet sein.

Die zweite Ausnehmung 18 hat ebenfalls einen unrunden Querschnitt gemäß der obigen Definition und ist hier bevorzugt als Langloch ausgebildet. Die Ausnehmung 18 ist jedoch größer als der Querschnitt des ersten Stangenbereichs 10a, so dass der erste Stangenbereich 10a mit Umfangspiel innerhalb der Ausnehmung 18 aufgenommen ist. Dabei ist die lange Abmessung des Querschnitts des Stangenbereichs 10a kürzer als die lange Abmessung des Querschnitts der zweiten Ausnehmung 18 aber länger als deren kurze Abmessung, und zwar um einen Betrag, der eine Verdrehung der beiden Querschnitte ineinander um einen Winkel von etwa 45° bis knapp unter 90° gestattet, wobei der Winkel jedoch abhängig ist von der Querschnittsform, um ein selbsthemmendes Verklemmen zu bewirken.

Im dargestellten Ausführungsbeispiel sind die Ausnehmung 18 und der erste Stangenbereich 10a so ausgerichtet, dass ihre langen Abmessungen und ihre kurzen Abmessungen in die gleiche Richtung weisen und ihre langen Abmessungen parallel zur Längserstreckung des Führungsblockes 11 weisen. Darüber hinaus sind die beiden Führungselemente 9, 10 so in der Aufnahmeplatte 8 aufgenommen, und die Lage der Ausnehmung 18 im Führungsblock 11 so bestimmt, dass der Mittenabstand zwischen den Mittelpunkten der beiden Ausnehmungen 17 und 18 dem Mittelabstand A zwischen den Mittelpunkten der Führungselemente 9 und 10 entspricht.

Zum Verdrehen des zweiten Führungselements in der Ausnehmung 18 ist das zweite Stangenelement 10b des zweiten Führungselementes 10 bevorzugt unterhalb der Aufnahmeplatte 8 verlängert und in einer Drehbuchse 19 aufgenommen, die mit einem Handhebel 20 verbunden ist. In der Drehbuchse 19 ist das zweite Stangenelement 10b drehfest gelagert, so dass durch ein Verdrehen des Handhebels 20 in Richtung des Pfeiles V die Buchse 19 zusammen mit dem zweiten Führungselement 10 um deren senkrechte Mittelachse verdreht wird. In der Drehbuchse 19 ist weiterhin eine Drehfeder 21 angeordnet, deren eines Ende mit der Drehbuchse 19 so verbunden ist, dass es sich zusammen mit der Drehbuchse 19 dreht, und deren anderes Ende ortsfest gelagert ist, bevorzugt in der Aufnahmeplatte 8. Die Drehfeder 21 ist so angeordnet, dass sie ohne äußere Einwirkung durch den Hebel 20 das zweite Führungselement 10 so verdreht, dass der erste Stangenbereich 10a in der Ausnehmung 18 die in Fig. 4 gezeigte Klemmstellung K einnimmt. In der Klemmstellung K hat sich der unrunde Querschnitt des ersten Stangenbereichs 10a so verdreht, dass die langen Abmessungen von Ausnehmung 18 und Stangenbereich 10a nicht mehr miteinander fluchtend ausgerichtet sind, sondern im Winkel zueinander stehen, so dass sich der Stangenbereich 10a mit seinen größeren Abmessungen an den Bereich der kleineren Abmessung der Ausnehmung 18 anlegt und sich dort durch Reibung verklemmt. Auf diese Weise ist die Aufnahmeplatte 8 mit dem Getränkeauslauf 5 sowie den beiden Führungselementen 9, 10 in jeder Höhenlage zu arretieren.

Soll die Arretierung zur Höhenverstellung gelöst werden, so wird der Handhebel 20 in Richtung des Pfeiles V verschwenkt, wodurch das zweite Führungselement 10 in die in Fig. 3 gezeigte Gleitstellung G bewegt wird, in der die Aufnahmeplatte 8 zusammen mit dem Getränkeauslauf 5 nach oben oder unten geschoben werden kann. Wird der Handhebel 20 in der gewünschten Stellung losgelassen, so bewegt die Feder das Führungselement 10 in die in Fig. 4 gezeigte Klemmstellung K zurück.

In Abwandlung des beschriebenen und gezeichneten Ausführungsbeispiels können die Bewegungsverhältnisse umgekehrt werden; d.h. es könnte der Führungsblock bewegt und die Aufnahmeplatte ortsfest sein. Statt des Führungselementes könnte die Aufnahmeöffnung der Arretiereinrichtung verdreht werden. Dies könnte beispielsweise durch eine runde Drehbuchse im Führungsblock 11 verwirklicht werden, die mit dem Langloch versehen ist. Die Längsführung mittels Gleitpassung könnte beispielsweise auch durch einen Schwalbenschwanzführung oder eine ähnliche Längsführung verwirklicht werden.

## Patentansprüche

1. Parallele Längsführung, insbesondere für einen höhenverstellbaren Getränkeauslauf (5) einer Getränkemaschine (1), mit einem ersten und einem zweiten, parallel zueinander angeordneten, langgestreckten Führungselement (9, 10), und mit einer Arretiereinrichtung (7), **dadurch gekennzeichnet, dass** das erste Führungselement (9), in einer ersten Ausnehmung (17) geführt ist und das zweite Führungselement (10) in einer zweiten Ausnehmung (18) aufgenommen und mit einer Arretiereinrichtung (7) versehen ist, die eine Betätigungseinrichtung (20) für eine Verdrehung des zweiten Führungselementes (10) relativ zur zweiten Ausnehmung (18) aufweist, derart, dass in einer ersten Verdrehstellung (G) eine axiale, relative Gleitbewegung zwischen dem zweiten Führungselement (10) und der Ausnehmung (18) gestattet ist und in einer zweiten Verdrehstellung (K) sich das zweite Führungselement (10) in der zweiten Ausnehmung (18) verklemmt.

2. Parallele Längsführung nach Anspruch 1, **dadurch gekennzeichnet, dass** das zweite Führungselement (10) einen Stangenbereich (10a) mit unrundem Querschnitt und die zweite Ausnehmung (18) einen unrunden Querschnitt aufweist, der größer als der Querschnitt des Stangenbereichs (10a) ist.

3. Parallele Längsführung nach Anspruch 1 oder 2, **dadurch gekennzeichnet, dass** die zweite Verdrehstellung (K) durch eine von der Betätigungseinrichtung (20) lösbare Feder (21) belastet ist.

4. Parallele Längsführung nach Anspruch 2 oder 3, **dadurch gekennzeichnet, dass** der unrunde Stangenbereich (10a) einen länglichen Querschnitt mit abgerundeten Ecken, bevorzugt einen ovalen Querschnitt, aufweist.

5. Parallele Längsführung nach einem der Ansprüche 2 bis 4, **dadurch gekennzeichnet, dass** die unrunde Ausnehmung (18) einen länglichen Querschnitt mit abgerundeten Ecken aufweist und bevorzugt als Langloch ausgebildet ist.

6. Parallele Längsführung nach einem der Ansprüche 1 bis 4, **dadurch gekennzeichnet, dass** die erste und die zweite Ausnehmung (17, 18) jeweils als Durchgangsloch in einem Führungsblock (11) mit einem Mittenabstand (A) zueinander ausgebildet sind, der dem Mittenabstand zwischen dem ersten Führungselement (9) und dem Führungselement (10) entspricht.

7. Parallele Längsführung nach einem der Ansprüche 1 bis 6, **dadurch gekennzeichnet, dass** das zweite Führungselement (10) drehbar aber axial fest in einer Aufnahmeplatte (8) gelagert ist.

8. Parallele Längsführung nach einem der Ansprüche 1 bis 7, **dadurch gekennzeichnet, dass** die erste und die zweite Ausnehmung (17, 18) in einem ortsfesten Führungsblock (11) angeordnet sind, dass das sich durch die erste Ausnehmung (17) erstreckende, erste Führungselement (9) seitlich fest, und das sich durch die zweite Ausnehmung (18) erstreckende, zweite Führungselement (10) drehbar und axial fest mit einer Aufnahmeplatte (8) verbunden sind, so dass die Aufnahmeplatte (8) und das zweite Führungselement (10) bezüglich des Führungsblocks (11) verschiebbar sind.

9. Parallele Längsführung nach einem der Ansprüche 1 bis 8, **dadurch gekennzeichnet, dass** das erste Führungselement (9) eine Stange mit kreisrundem Querschnitt enthält, die in einem Führungsblock (11) seitlich fest und axial relativ verschiebbar, sowie in einer Aufnahmeplatte (8) axial fest und seitlich fest aufgenommen ist.

10. Parallele Längsführung nach einem der Ansprüche 1 bis 9, **dadurch gekennzeichnet, dass** das zweite Führungselement (10) eine Stange mit dem ersten unrunden Stangenbereich (10a) und einem zweiten Stangenbereich (10b) mit kreisrundem Querschnitt aufweist, wobei der unrunde Stangenbereich (10a) in der in einem Führungsblock (11) vorgesehenen unrunden, zweiten Ausnehmung (18) und der runde Stangenbereich (10b) verdrehbar aber axial und seitlich fest in einer Aufnahmeplatte (8) aufgenommen ist.

11. Getränkemaschine (1) mit einem Getränkeauslauf (5), der mit Hilfe einer parallelen Längsführung nach einem der Ansprüche 1 bis 10 höhenverstellbar ist.

## Claims

1. Parallel longitudinal guide, in particular for a height-adjustable beverage outlet (5) in a drinks machine (1), having a first and a second elongated guide element (9, 10) arranged parallel to one another and having a locking device (7), **characterised in that** the first guide element (9) is carried in a first recess (17) and the second guide element (10) is accommodated in a second recess (18) and is provided with a locking device (7) possessing an actuating device (20) for rotating the second guide element (10) relative to the second recess (18) in such a way that in a first rotational position (G) an axial, relative sliding movement between the second element (10) and the recess (18) is permitted and in a second rotational position (K) the second guide element (10) locks itself in position in the second recess (18).

2. Parallel longitudinal guide according to claim 1, **characterised in that** the second guide element (10) possesses a bar section (10a) having a non-circular cross-section and the second recess (18) has a non-circular cross-section which is greater than the cross-section of the bar section (10a).

3. Parallel longitudinal guide according to claim 1 or 2, **characterised in that** the second rotational position (K) is put under load by a spring (21) which is detachable from the actuating device (20).

4. Parallel longitudinal guide according to claim 2 or 3, **characterised in that** the non-circular bar section (10a) has an oblong cross-section with rounded corners, preferably an oval cross-section.

5. Parallel longitudinal guide according to any of claims 2 to 4, **characterised in that** the non-circular recess (18) has an oblong cross-section with rounded corners and is preferably constructed in the form of an elongated hole.

6. Parallel longitudinal guide according to any of claims 1 to 4, **characterised in that** the first and the second recess (17, 18) are each constructed as a through-hole in a guide block (11) with an centre-to-centre spacing (A) relative to one another corresponding to the centre-to-centre spacing between the first guide element (9) and the guide element (10).

7. Parallel longitudinal guide according to any of claims 1 to 6, **characterised in that** the second guide element (10) is mounted in rotatable but axially fixed manner in a receiving plate (8).

8. Parallel longitudinal guide according to any of claims 1 to 7, **characterised in that** the first and the second recess (17, 18) are arranged in a stationary guide block (11) and that the first guide element (9) extending through the first recess (17) is laterally fixed and the second guide element (10) extending through the second recess (18) is connected in rotatable and axially fixed manner to a receiving plate (8) so that the receiving plate (8) and the second guide element (10) are displaceable with respect to the guide block (11).

9. Parallel longitudinal guide according to any of claims 1 to 8, **characterised in that** the first guide element (9) comprises a bar having a circular cross-section, which bar is accommodated in laterally fixed and axially relatively displaceable manner in a guide block (11) and in axially fixed and laterally fixed manner in a receiving plate (8).

10. Parallel longitudinal guide according to any of claims 1 to 9, **characterised in that** the second guide element (10) comprises a bar having the first non-circular bar section (10a) and a second bar section (10b) with a circular cross-section, wherein the non-circular bar section (10a) is accommodated in the non-circular second recess (18) provided in a guide block (11) and the circular bar section (10b) is accommodated in rotatable but axially and laterally fixed manner in a receiving plate (8).

11. Drinks machine (1) having a beverage outlet (5) which is height-adjustable with the aid of a parallel longitudinal guide according to any of claims 1 to 10.

## Revendications

1. Guides longitudinaux parallèles, en particulier pour un bec de distribution de boisson (5), à hauteur réglable, sur un distributeur de boissons (1), avec un premier et un deuxième élément de guidage (9, 10) allongés, parallèles l'un à l'autre, et avec un dispositif d'arrêt (7), **caractérisés en ce que** le premier élément de guidage (9) est logé dans un premier évidement (17) et le deuxième élément de guidage (10) est reçu dans un deuxième évidement (18) et est muni d'un dispositif d'arrêt (7), qui comporte un dispositif de manoeuvre (20) pour une rotation du deuxième élément de guidage (10) par rapport au deuxième évidement (18), de telle sorte que, dans une première position de rotation (G), un mouvement de glissement relatif axial est possible entre le deuxième élément de guidage (10) et l'évidement (18), et que dans une deuxième position de rotation (K), le deuxième élément de guidage (10) est bloqué dans le deuxième évidement (18).

2. Guides longitudinaux parallèles selon la revendication 1, **caractérisés en ce que** le deuxième élément de guidage (10) comporte un tronçon de barre (10a) avec une section ovalisée et le deuxième évidement (18) a une section ovalisée qui est plus grande que la section du tronçon de barre (10a).

3. Guides longitudinaux parallèles selon la revendication 1 ou 2, **caractérisés en ce que** la deuxième position de rotation (K) est sollicitée par un ressort (21) pouvant être détaché du dispositif de manoeuvre (20).

4. Guides longitudinaux parallèles selon la revendication 2 ou 3, **caractérisés en ce que** le tronçon de barre (10a) ovalisé a une section oblongue à angles arrondis, de préférence une section ovale.

5. Guides longitudinaux parallèles selon l'une quelconque des revendications 2 à 4, **caractérisés en ce que** l'évidement (18) ovalisé a une section oblongue à angles arrondis et est réalisé de préférence sous forme de trou oblong.

6. Guides longitudinaux parallèles selon l'une quelconque des revendications 1 à 4, **caractérisés en ce que** le premier et le deuxième évidement (17, 18) sont réalisés chacun sous forme de trou débouchant dans un bloc de guidage (11) avec un entraxe (A), qui correspond à l'entraxe entre le premier élément de guidage (9) et le deuxième élément de guidage (10).

7. Guides longitudinaux parallèles selon l'une quelconque des revendications 1 à 6, **caractérisés en ce que** le deuxième élément de guidage (10) est monté rotatif, mais immobile dans le sens axial dans une plaque de réception (8).

8. Guides longitudinaux parallèles selon l'une quelconque des revendications 1 à 7, **caractérisés en ce que** le premier et le deuxième évidement (17, 18) sont agencés dans un bloc de guidage (11) localement fixe, **en ce que** le premier élément de guidage (9), qui passe à travers le premier évidement (17), est assemblé de manière fixe dans le sens latéral avec une plaque de réception (8), et le deuxième élément de guidage (10), qui passe à travers le deuxième évidement (18), est assemblé de manière rotative mais immobile dans le sens axial avec ladite plaque de réception, de telle sorte que la plaque de réception (8) et le deuxième élément de guidage (10) sont mobiles par rapport au bloc de guidage (11).

9. Guides longitudinaux parallèles selon l'une quelconque des revendications 1 à 8, **caractérisés en ce que** le premier élément de guidage (9) comporte une barre ayant une section ronde qui est reçue dans un bloc de guidage (11) de manière fixe dans le sens latéral et mobile par rapport au sens axial et est reçue dans une plaque de réception (8) de manière fixe dans le sens axial et dans le sens latéral.

10. Guides longitudinaux parallèles selon l'une quelconque des revendications 1 à 9, **caractérisés en ce que** le deuxième élément de guidage (10) comporte une barre avec le premier tronçon (10a) ovalisé et un deuxième tronçon (10b) ayant une section ronde, le tronçon de barre ovalisé (10a) étant reçu dans le deuxième évidement (18) ovalisé, prévu dans un bloc de guidage (11), et le tronçon de barre rond (10b) étant reçu de manière rotative mais immobile dans le sens axial et latéral dan une plaque de réception (8).

11. Distributeur de boissons (1) comportant un bec de distribution de boisson (5), qui est réglable en hauteur au moyen de guides longitudinaux parallèles selon l'une quelconque des revendications 1 à 10.
